# EUROPÄISCHE PATENTSCHRIFT

(11) **EP 3 781 999 B1**
(45) Veröffentlichungstag und Bekanntmachung des Hinweises auf die Patenterteilung: **04.12.2024**
(21) Anmeldenummer: 19703294.9
(22) Anmeldetag: 04.02.2019
(51) Int. Cl.: G05B 19/418

(54) **WERKERFÜHRUNGSANLAGE, PROZESSANLAGE, VERFAHREN, COMPUTERPROGRAMM, MASCHINENLESBARES SPEICHERMEDIUM UND ELEKTRONISCHE STEUEREINHEIT**
WORKER GUIDANCE SYSTEM, PROCESS SYSTEM, METHOD, COMPUTER PROGRAM, MACHINE-READABLE STORAGE MEDIUM, AND ELECTRONIC CONTROL UNIT
INSTALLATION DE GUIDAGE D'OPÉRATEUR, INSTALLATION DE TRAITEMENT, PROCÉDÉ, PROGRAMME INFORMATIQUE, SUPPORT D'ENREGISTREMENT LISIBLE PAR MACHINE ET UNITÉ DE COMMANDE ÉLECTRONIQUE

(30) Priorität: 20.04.2018 DE 102018206034
(43) Veröffentlichungstag der Anmeldung: 24.02.2021
(73) Patentinhaber: Robert Bosch GmbH, 70442 Stuttgart (DE)
(72) Erfinder: DOSE, Sven, 76646 Bruchsal (DE); SCHOEFFLER, Michael, 75365 Calw-Altburg (DE)
(86) Internationale Anmeldenummer: PCT/EP2019/052598
(87) Internationale Veröffentlichungsnummer: WO 2019/201487

(56) Entgegenhaltungen:
- EP-A1- 2 052 807
- DE-A1- 102005 005 266

## Beschreibung

### Stand der Technik

Es wird eine Werkerführungsanlage zur Führung eines Werkers bei der Durchführung eines Prozesses mit einer Prozessanlage vorgeschlagen. Die Prozessanlage weist mindestens eine Prozesseinrichtung mit Prozesseinrichtungsfähigkeiten auf, wobei der Prozess mindestens einen Arbeitsschritt umfasst. Die Werkerführungsanlage weist eine Steuereinrichtung und eine Kommunikationseinrichtung auf, wobei die Steuereinrichtung ausgebildet ist, die Kommunikationseinrichtung basierend auf Prozessdaten anzusteuern, den durchzuführenden Arbeitsschritt dem Werker zu kommunizieren.

In der Produktion ist es immer noch gängig, teilweise Produktionsschritte mit manueller Durchführung durch einen Werker vorzusehen. Insbesondere bei der Herstellung geringer Stückzahlen ist dies weit verbreitet. Um die Qualität abzusichern und die Einarbeitungsaufwände für den Werker zu reduzieren, kommen Werkerführungssysteme zum Einsatz. Heutige Produktionssysteme, in denen eine Werkerführung eingesetzt wird, sind jedoch in der Regel sehr starr und auf eine spezifische Auswahl von Produkten gerichtet. Die Werkerführung wird auf die konkreten Arbeitsabläufe fix programmiert und eingerichtet. Mit zunehmender Variantenvielfalt bei gleichzeitig sinkender Produktlebenszeit ist diese starre Programmierung nachteilig. Insbesondere bei wandlungsfähigen Produktionssystemen kann dies problematisch sein.

Die Druckschrift DE 10 2015 215 666 A1, die wohl den nächstkommenden Stand der Technik bildet, beschreibt ein Werkzeug, insbesondere ein Elektrowerkzeug, welches eine Anzeigeeinrichtung sowie Mittel zum Empfang und zur Auswertung von übermittelten Daten aufweist. Das Werkzeug ist dazu geeignet und fähig, basierend auf dem Werkzeug übermittelten Daten und auf der Anzeigeeinrichtung wenigstens eine Information anzuzeigen, die wenigstens einen, insbesondere mit dem Werkzeug vorzunehmenden Arbeitsschritt betrifft oder repräsentiert.

Die Druckschrift DE 10 2005 005 266 A1 beschreibt ein Verfahren und eine Vorrichtung zum automatisierten Erzeugen und Anzeigen von Arbeitsanweisungen für die Montage eines Erzeugnisses. Im Rahmen des Verfahrens werden Arbeitsschritte zum Montieren des Erzeugnisses durch eine Recheneinheit erzeugt, Konstruktionsdaten ausgelesen und Daten für die visuelle Darstellung der Teile aus den Konstruktionsdaten automatisch erzeugt. Darauf basierend werden Arbeitsanweisungen visuell ausgegeben. Zur Erzeugen der Daten für die visuelle Darstellung des Werkzeugs greift die Recheneinheit auf einen Betriebsmittelspeicher mit bestehenden technischen Daten zurück.

In der Druckschrift EP 2 052 807 A1 ist ein Montagearbeitsplatz zum Durchführen eines Montagevorgangs mit einem Werkzeug offenbart. Der Montagevorgang beschreibt einen Montagearbeitsplatz zum Durchführen eines Montagevorgangs mit einem Werkzeug, wobei der Montagevorgang mindestens einen Montageschritt umfasst und wobei der Montagearbeitsplatz mit einer Montagesteuerung verbunden ist. Ein Display zur Visualisierung des anstehenden Montageschritts und eine Datenbank zur Speicherung der Visualisierungsdaten ist mit der Montagesteuerung verbunden. Das Werkzeug stellt die Beendigung des Montageschritts selbstständig fest, indem das Werkzeug mit der Montagesteuerung in Verbunding steht und an die Montagesteuerung die momentan erreichten Montageparameter übermittelt.

### Offenbarung der Erfindung

Es wird eine Werkerführungsanlage zur Führung eines Werkers mit den Merkmalen des Anspruchs 1 vorgeschlagen. Ferner wird eine Prozessanlage mit den Merkmalen des Anspruchs 12, ein Verfahren mit den Merkmalen des Anspruchs 13, ein Computerprogramm mit den Merkmalen des Anspruchs 14 und ein maschinenlesbares Speichermedium mit den Merkmalen des Anspruchs 15 vorgeschlagen.

Es wird eine Werkerführungsanlage zur Führung eines Werkers vorgeschlagen. Die Werkerführungsanlage ist insbesondere eine programmierbare, beispielsweise eine umprogrammierbare Werkerführungsanlage und im Speziellen eine grafisch programmierbare Werkerführungsanlage. Die Werkerführungsanlage ist ausgebildet, einen Werker bei der Durchführung eines Prozesses und/oder mehrerer Prozesse mittels einer Prozessanlage zu führen. Der Werker ist beispielsweise eine Person, die den Prozess ausführt. Der Prozess kann ein Produktionsprozess, Bearbeitungsprozess oder ein Messprozess sein. Die Werkerführungsanlage ist eingerichtet, dem Werker Instruktionen zu geben, welche Arbeitsschritte auf welche Weise durchzuführen sind, wobei die korrekte Ausführung der manuell durchgeführten Arbeitsschritte, vorzugsweise sensorgestützt, überwacht wird. Die Prozessanlage ist und/oder umfasst beispielsweise ein Arbeitsplatz, ein Messplatz oder eine Produktionsanlage. Die Prozessanlage kann teilweise automatisiert sein. Insbesondere ist die Prozessanlage ausgebildet, manuelle Arbeitsschritte des Werkers vorzusehen.

Die Prozessanlage ist ausgebildet, ein Werkstück herzustellen, zu überprüfen oder zu bearbeiten. Im Speziellen ist die Prozessanlage für ein variables Werkstückspektrum ausgebildet. Die Prozessanlage kann vorzugsweise umgebaut werden und so auf unterschiedliche Werkstücke angepasst werden.

Die Prozessanlage weist mindestens eine Prozesseinrichtung mit Prozesseinrichtungsfähigkeiten auf. Beispielsweise umfasst die Prozessanlage genau eine Prozesseinrichtung, insbesondere mehr als drei Prozesseinrichtungen und im Speziellen mehr als zehn Prozesseinrichtungen. Die Prozesseinrichtungen sind vorzugsweise zur Interaktion mit dem Werker ausgebildet. Beispielsweise sind die Prozesseinrichtungen Werkzeuge für den Werker. Die Prozesseinrichtungsfähigkeiten sind Selbstbeschreibungen der Prozesseinrichtung, welche Fähigkeiten, Möglichkeiten und/oder Bearbeitungsschritte, die Prozesseinrichtung ermöglicht. Vorzugsweise sind die Prozesseinrichtungsfähigkeiten datentechnisch in der Werkerführungsanlage, beispielsweise einer zentralen Datenbank, hinterlegt. Alternativ können die Prozesseinrichtungsfähigkeiten datentechnisch in der Prozesseinrichtung hinterlegt sein. Die Prozesseinrichtungsfähigkeiten sind vorzugsweise einmalig und/oder initial, beispielsweise vom Hersteller, hinterlegt.

Der Prozess umfasst mindestens einen Arbeitsschritt. Vorzugsweise umfasst der Prozess mehrere Arbeitsschritte, wobei insbesondere mindestens ein Arbeitsschritt ein manueller Arbeitsschritt, durchzuführen von dem Werker, ist. Vorzugsweise ist der Arbeitsschritt unter Verwendung der Prozesseinrichtung durchzuführen. Beispielsweise ist der Arbeitsschritt ein Bearbeiten oder ein Vermessen des Werkstücks. Insbesondere ist der Arbeitsschritt beispielsweise ein Bohren, ein Schleifen oder ein Bearbeiten mit einem Werkzeug. Im Speziellen ist der Arbeitsschritt ein Bearbeiten des Werkstücks mittels der Prozesseinrichtung. Der Prozess ist vorzugsweise eine Produktion oder eine Überprüfung des Werkstücks.

Die Werkerführungsanlage weist eine Steuereinrichtung und eine Kommunikationseinrichtung auf. Die Steuereinrichtung ist beispielsweise eine Rechnereinheit, ein Prozessor oder ein Computerchip. Die Steuereinrichtung kann eine zentrale Steuereinrichtung sein. Insbesondere kann es auch vorgesehen sein, dass die Prozesseinrichtung die Steuereinrichtung umfasst. Im Speziellen umfasst die Prozessanlage die Steuereinrichtung. Die Kommunikationseinrichtung kann eine zentrale Kommunikationseinrichtung sein, alternativ und/oder ergänzend ist die Kommunikationseinrichtung von der Prozesseinrichtung umfasst. Die Kommunikationseinrichtung kann auch Teil der Prozessanlage sein. Die Kommunikationseinrichtung ist beispielsweise eine Anzeigeeinrichtung, im Speziellen ein Bildschirm oder Lampen, die Positionen anzeigen können. Die Kommunikationseinrichtung kann auch eine akustische Kommunikationseinrichtung bilden, beispielsweise einen Lautsprecher zur Ausgabe von Ansagen oder eines anderweitigen akustischen Signals.

Die Steuereinrichtung ist ausgebildet, die Kommunikationseinrichtung basierend auf Prozessdaten anzusteuern. Insbesondere sind die Steuereinrichtung und die Kommunikationseinrichtung datentechnisch miteinander verbunden. Basierend auf den Prozessdaten steuert die Steuereinrichtung die Kommunikationseinrichtung an, dem Werker durchzuführende Arbeitsschritte gemäß des Prozesses zu kommunizieren. Beispielsweise steuert die Steuereinrichtung die Kommunikationseinrichtung an, dem Werker anzuzeigen, welcher Arbeitsschritt, wie, wann und/oder wo durch den Werker durchzuführen ist. Beispielsweise zeigt dazu die Kommunikationseinrichtung auf dem Bildschirm ein Bild, ein Video oder Textinformationen zum durchzuführenden Arbeitsschritt an. Im Speziellen können die Prozesseinrichtungsfähigkeiten angezeigt werden. Ferner kann es beispielsweise vorgesehen sein, dass die Kommunikationseinrichtung mittels dem Aufleuchten von Lampen dem Werker anzeigt, wo er einen Arbeitsschritt durchzuführen hat, beispielsweise mit welchem Werkzeug und/oder mit welcher Prozesseinrichtung. Anzeigbare Informationen zum durchzuführenden Arbeitsschritt sind beispielsweise, wie ein Arbeitsschritt auszuführen ist, welche Bauteile zu verwenden sind. Ferner ist es auch möglich, als anzuzeigende und/oder zu kommunizierende Information dem Werker eine Rekonfiguration der Prozessanlage, der Prozesseinrichtung und/oder anderer Hilfsmittel anzuzeigen. Hierzu gehören beispielsweise Informationen, wie eine Prozesseinrichtung abgebaut werden kann und aus dem Arbeitsbereich und/oder der Prozessanlage zu räumen ist. Ferner ist es möglich, dem Werker zu kommunizieren, welche Prozesseinrichtung wie im Arbeitsbereich aufzubauen ist und wie diese in Betrieb genommen werden soll. Die zu kommunizierenden Informationen werden insbesondere sowohl durch eine Ablaufsteuerung als auch durch die Prozesse selbst gesteuert.

Der Steuereinrichtung sind die Prozesseinrichtungsfähigkeiten als Prozesseinrichtungsfähigkeitsdaten bereitgestellt. Die Steuereinrichtung ist dazu datentechnisch mit den Prozesseinrichtungen verbunden und/oder verbindbar. Die Prozessdaten umfassen die Prozesseinrichtungsfähigkeitsdaten. Damit erfolgt die Ansteuerung der Kommunikationseinrichtung zur Anzeige und/oder zur Kommunikation des durchzuführenden Arbeitsschritts insbesondere auch auf den Prozesseinrichtungsfähigkeiten. Beispielsweise umfassen die Prozesseinrichtungsfähigkeiten Informationen, Videos und/oder Bilder, wie diese zu verwenden sind, wobei diese Informationen direkt und/oder verarbeitet mittels der Kommunikationseinrichtung dem Werker kommunizierbar sind. Beispielsweise umfassen auch die Prozessdaten, wie ein Werkstück mit der Prozesseinrichtung bearbeitbar ist und/oder zu bearbeiten ist, wobei durch das Bereitstellen der Prozesseinrichtungsfähigkeitsdaten an die Steuereinrichtung diese Informationen zur Verwendung der Prozesseinrichtung mittels der Kommunikationseinrichtung kommunizierbar sind. Es ergibt sich damit eine dynamische Anpassung der Werkerführung, da Informationen und/oder Daten variabel basierend auf der Prozesseinrichtung und/oder den dazugehörigen Prozesseinrichtungsfähigkeiten anpassbar sind.

Die Werkerführungsanlage ermöglicht damit, eine wandlungsfähige Produktionsanlage flexibel zu unterstützen, wobei auch physisch rekonfigurierbare Prozessanlagen mittels der Werkerführungsanlage einfach anpassbar und/oder orchestriert werden können. Da die Werkerführungsanlage dynamisch ausgelegt ist, sind Änderungen in den Arbeitsabläufen in der Werkerführung nicht aufwändig zu programmieren, da diese Anpassungen mittels der Prozesseinrichtungsfähigkeiten einfach zusammenstellbar sind. Der Engineering-Aufwand bei der Anpassung der Werkerführungsanlage ist damit reduziert. Die erforderlichen Abläufe zur Fertigung, zum Beispiel bei der Montage von Produkten, werden insbesondere als verknüpfte Struktur oder als Sequenz von Prozesseinrichtungsfähigkeiten und den beteiligten Einzelteilen und/oder Prozessmitteln modelliert. Die Steuereinrichtung kann Arbeitspläne interpretieren und autonom die Anpassung der Kommunikationseinrichtung und/oder Kommunikation der Prozesse und/oder Arbeitsschritte ausführen, wobei dem Werker die korrekten und/oder nötigen Informationen kommuniziert werden.

Besonders bevorzugt ist es, dass die Prozessdaten einen Prozessablauf umfassen. Insbesondere umfasst der Prozessablauf mehrere Arbeitsschritte. Beispielsweise ist der Prozessablauf ein Ablauf mehrerer Arbeitsschritte, wobei der Prozessablauf die Reihenfolge, die Dauer und/oder die Kombination von Arbeitsschritten umfasst. Der Prozessablauf kann automatische, manuelle und/oder teilmanuelle Arbeitsschritte umfassen. Im Speziellen kann es vorgesehen sein, dass die Steuereinrichtung ausgebildet ist, den Prozessablauf dem Werker zu kommunizieren, beispielsweise mittels der Kommunikationseinrichtung. Der Prozessablauf kann beispielsweise als ein Workflow dem Werker kommuniziert werden.

Optional ist es vorgesehen, dass die Prozesseinrichtungsfähigkeitsdaten Informationen zu dem zu kommunizierenden Arbeitsschritt umfassen. Beispielsweise ist die Prozesseinrichtung eine Schraubstation, wobei die Prozesseinrichtungsfähigkeitsdaten als Information umfassen, dem Werker zu kommunizieren, dass er eine Schraube in einen Gegenstand mit einem Drehmoment schrauben soll. Die Steuereinrichtung kann auf diese Information zugreifen und dem Werker auf der Kommunikationseinrichtung kommunizieren. Im Speziellen können Informationen zu dem zu kommunizierenden Arbeitsschritt auch in den Prozessdaten und/oder dem Prozessablauf hinterlegt sein.

Eine Ausgestaltung der Erfindung sieht vor, dass die Steuereinrichtung ausgebildet ist, basierend auf dem Prozess, dem Arbeitsschritt, dem Prozessablauf und/oder den Prozessdaten eine für den Arbeitsschritt und/oder Prozess geeignete Prozesseinrichtung auszuwählen. Beispielsweise ist der Prozess "Verschrauben mit Drehmoment X, Einpressen von Bauteil Y und Messgröße Z erfassen". Die Steuereinrichtung ist ausgebildet basierend auf dem Prozess und/oder dem Prozessablauf, die Arbeitsschritte zu extrahieren. Im obigen Beispiel die Arbeitsschritte "verschrauben", "einpressen" und "Z messen. Die Steuereinrichtung ist im Speziellen ausgebildet den Arbeitsschritten eine Prozesseinrichtung basierend auf den Prozesseinrichtungsfähigkeitsdaten zuzuordnen. Im obigen Beispiel beispielsweise dem Arbeitsschritt "verschrauben" als Prozesseinrichtung eine Schraubstation zuzuordnen, dem Arbeitsschritt "Einpressen" eine Presse zuzuordnen und dem Arbeitsschritt "Z messen" ein Messgerät zuzuordnen. Insbesondere kann die

Besonders bevorzugt ist es, dass die Steuereinrichtung ausgebildet ist, die Prozesseinrichtung zu starten und/oder anzusteuern den Arbeitsschritt durchzuführen. Insbesondere können die Prozesseinrichtung den Arbeitsschritt und/oder Arbeitsschrittinformationen implementiert haben. Ist der Arbeitsschritt beispielsweise vollautomatisch, kann die Prozesseinrichtung angesteuert werden, den Prozess ohne Werkeranweisungen durchzuführen. Ist der Arbeitsschritt manuell oder halbmanuell kann die Implementierung eine Anleitung des Werkers umfassen. Beispielsweise kann die Implementierung der Anleitung umfassen, dass in der Prozesseinrichtung befindliche Lämpchen angesteuert werden, den Werker zu leiten. Ferner kann beispielsweise eine interne oder externe Anzeige angesteuert werden, den Werker zu leiten, wobei die Prozesseinrichtung insbesondere selbst eine Anzeige, eine Kommunikationseinrichtung oder eine kommunizierfähige Prozesseinrichtung sucht und/oder ansteuert. Sind spezifische Informationen, zum Beispiel Fotos oder Werteparameter nötig, kann vorzugsweise die Steuereinrichtung und/oder die Prozesseinrichtung ausgebildet sein, die Erforderlichen Parameter und oder Daten anzugeben und/oder zu bestimmen. Spezifische Informationen können insbesondere aus Datenquellen extrahiert sein, beispielsweise aus einer Modellierung des Prozesses, des Arbeitsablaufs und/oder aus einer externen Datenquelle. Insbesondere können zu kommunizierende Daten und/oder Arbeitsschritte in Textform und/oder Bildform in der Prozesseinrichtung hinterlegt sein.

Eine Ausgestaltung der Erfindung sieht vor, dass der Prozess den Einbau und/oder die Verwendung eines Bauteils vorsieht. Insbesondere kann der Prozess einen Arbeitsschritt zum Einbau und/oder zur Verwendung des Bauteils umfassen. Die Prozessdaten umfassen im Speziellen Bauteilinformationen. Die Bauteilinformationen können eine Bauteilnummer, eine Bauteilgeometrie oder ein Bauteilfoto umfassen. Beispielsweise ist die Steuereinrichtung ausgebildet, die Kommunikationseinrichtung basierend auf den Prozessdaten anzusteuern, dem Werker ein Bild und/oder eine Bauteilnummer des Bauteils anzuzeigen, dass der Werker weiß, welches Bauteil er zu verwenden hat. Ferner können die Prozessdaten Informationen umfassen, mit welchen Prozessparametern das Bauteil und/oder der Arbeitsschritt auszuführen ist, beispielsweise welches Drehmoment nötig ist, welche Bearbeitungstemperatur und/oder welche Messparameter vorgesehen sind. Insbesondere kann es vorgesehen sein, dass die Werkerführungsanlage sensorisch erfassen kann, ob der Werker das richtige Bauteil verwendet hat, wobei dieser Abgleich vorzugsweise mit sensorerfassten Daten auf einem Vergleich der Prozessdaten und/oder der Bauteilinformationen basieren kann.

Besonders bevorzugt ist es, dass die Bauteilinformationen von einem ERP-System bereitgestellt sind. Ein ERP-System steht für Enterprise-Resourcing-Planning-System. Das ERP-System kann zentral in der Werkerführungsanlage oder in der Prozessanlage hinterlegt sein. Ferner kann es vorgesehen sein, dass die Werkerführungsanlage mit einem externen ERP-System verbunden ist, wobei durch das ERP-System die Bauteilinformationen der Werkerführungsanlage bereitgestellt sind. Das ERP-System kann beispielsweise als Bauteilinformationen der Werkerführungsanlage, die Anzahl und/oder den Ort des Bauteils bereitstellen.

Eine Ausgestaltung der Erfindung sieht vor, dass die Werkerführungsanlage eine Sensoreinrichtung zur Überwachung des Arbeitsschritts, des Prozesses und/oder der Produktionsanlage umfasst. Die Sensoreinrichtung ist zur Bereitstellung von Sensordaten ausgebildet. Die Sensoreinrichtung ist beispielsweise eine optische Sensoreinrichtung, beispielsweise eine Kameraeinrichtung, alternativ kann die Sensoreinrichtung eine Chipleseeinrichtung, eine haptische Sensoreinrichtung oder eine Sensoreinrichtung zur Messung von elektromagnetischen Eigenschaften sein. Die Prozessdaten umfassen dabei insbesondere die Sensordaten. Beispielsweise ist die Sensoreinrichtung ausgebildet, zu detektieren, ob der Werker ein Werkstück verarbeitet hat und/oder ob ein Arbeitsschritt durch den Werker ausgeführt wurde. Der ausgeführte Arbeitsschritt und/oder die Verwendung des Bauteils kann als Sensordaten von der Steuereinrichtung verwendet werden. Die Steuereinrichtung ist dann beispielsweise ausgebildet, den Prozessablauf weiterzuführen und beispielsweise den nächsten Arbeitsschritt dem Werker mitzuteilen. Insbesondere kann es auch vorgesehen sein, dass die Sensoreinrichtung ein Betätigungsschalter ist, wobei der Betätigungsschalter beispielsweise durch den Werker zu betätigen ist, wenn er den Arbeitsschritt ausgeführt hat. So kann die Werkerführungsanlage und/oder die Steuereinrichtung die nächste Anweisung und/oder nächste Kommunikation dem Werker kommunizieren, wenn sensorisch erkannt wurde, dass ein Arbeitsschritt erfolgreich ausgeführt wurde. Ist eine sensorische Erfassung nicht möglich, kann der Werker zur Quittierung des Arbeitsschrittes aufgefordert werden.

Besonders bevorzugt ist es, dass der Prozess mindestens zwei Arbeitsschritte umfasst. Die zwei Arbeitsschritte sind im Prozess vorzugsweise in einer bestimmten Reihenfolge ausführbar und/oder auszuführen. Die Steuereinrichtung ist dabei vorzugsweise ausgebildet, die Kommunikationseinrichtung basierend auf den Prozessdaten anzusteuern, die Arbeitsschritte des Prozesses zur Durchführung dem Werker in einer richtigen Reihenfolge anzuzeigen. Beispielsweise werden dem Werker die Arbeitsschritte und/oder der folgende Arbeitsschritt nur angezeigt, wenn der vorherige Arbeitsschritt durchgeführt wurde. Dazu umfassen die Prozessdaten insbesondere den Prozessablauf.

Eine Ausgestaltung der Erfindung sieht vor, dass die Arbeitsschritte als eine Sequenz und/oder als eine Verknüpfung von Prozesseinrichtungsfähigkeiten darstellbar ist und/oder ausgebildet ist. Der Prozess kann beispielsweise als eine Aneinanderreihung von Arbeitsschritten dargestellt werden. Insbesondere ist der Prozess in der Steuereinrichtung als eine solche Verknüpfung und/oder Sequenz von Arbeitsschritten hinterlegt. Besonders bevorzugt ist es, dass die Steuereinrichtung ausgebildet ist, mindestens einem Arbeitsschritt eine Prozesseinrichtung zuzuordnen. Insbesondere kann es vorgesehen sein, dass die Werkerführungsanlage durch den Werker und/oder eine Person programmierbar, insbesondere grafisch programmierbar ist, einen neuen Prozess durch eine Verknüpfung von Arbeitsschritten basierend auf Prozesseinrichtungsfähigkeiten anzulegen. Nachdem bei einer Hinzunahme einer weiteren Prozesseinrichtung mit hinterlegten Prozesseinrichtungsfähigkeiten die Prozessanlage modifiziert wird, kann so ein Prozess angelegt werden, welcher einen neuen Arbeitsschritt umfasst, der in die Sequenz und/oder in die Verknüpfung integrierbar ist. Somit wird eine modular angelegte Werkerführungsanlage bereitgestellt.

Besonders bevorzugt ist es, dass die Steuereinrichtung ausgebildet ist, basierend auf dem Prozess, dem Arbeitsschritt, dem Prozessablauf, den Prozesseinrichtungsfähigkeiten und/oder den Prozessdaten zu kommunizierende Informationen zu extrahieren und mittels der Kommunikationseinrichtung anzuzeigen. Beispielsweise ist es vorgesehen, dass wenn für die Fertigung eines Produkts ein Prozess benötigt wird, der aktuell nicht verfügbar ist, wird eine Prozesseinrichtung bestimmt, welche seine Demontage anleiten soll. Im Anschluss an diese Demontage kann es vorgesehen sein, dass die Steuereinrichtung ausgebildet ist, dem Werker zu kommunizieren, welche Prozesseinrichtung er aufbauen soll.

Besonders bevorzugt ist es, dass die Werkerführungsanlage eine Eingabeeinrichtung umfasst. Die Eingabeeinrichtung ist beispielsweise eine Tastatur, ein Touchscreen oder eine Sprachsteuereinrichtung. Mittels der Eingabeeinrichtung ist es insbesondere vorgesehen, dass der Werker Prozessparameter einstellen und/oder festlegen kann. Die Prozessparameter basieren vorzugsweise auf den Prozesseinrichtungsfähigkeiten. Beispielsweise kann der Werker und/oder eine Person einstellen, wie eine Prozesseinrichtung zu verwenden ist, insbesondere mit welchen Parametern. Beispielsweise ist die Prozesseinrichtung eine Schraubeinrichtung, wobei mittels der Eingabeeinrichtung einstellbar ist, welches Drehmoment bei dem Prozess und/oder bei dem Arbeitsschritt zu verwenden ist.

Insbesondere kann es vorgesehen sein, dass die Werkerführungsanlage eine Rückkopplungseinrichtung umfasst, wobei die Rückkopplungsvorrichtung ausgebildet ist, eine Betätigung durch den Werker als Werkerdaten bereitzustellen. Die Werkerdaten sind insbesondere ähnlich zu den Sensordaten zu verstehen. Die Prozessdaten umfassen vorzugsweise die Werkerdaten. Mittels den Werkerdaten und/oder der Betätigung der Rückkopplungseinrichtung kann beispielsweise ein Werker der Werkerführungsanlage und/oder der Steuereinrichtung mitteilen, dass er einen Arbeitsschritt und/oder einen Prozess ausgeführt hat. Die Betätigung der Rückkopplungseinrichtung kann beispielsweise eine Quittierung und/oder den Abschluss eines Arbeitsschrittes bedeuten.

Die Werkerführungsanlage kann auch als ein fähigkeitsbasiertes System ausgebildet sein, bei dem die Kommunikation des Arbeitsschrittes einmalig modelliert wird, die Daten, insbesondere Prossdaten, jedoch dynamisch integriert werden. Dabei ist es beispielsweise vorgesehen, dass die Arbeitsschritte vor Beginn des Prozesses als untergeordneter Ablauf modelliert wird. Insbesondere ist es hierbei vorgesehen, dass die Prozesseinrichtung als Prozesseinrichtungsfähigkeitsdatum seine Funktion bereitstellt, beispielweise "Setze Schraubprogramm mit Drehmoment M" und/oder "Bestätige Ausführung". Vorzugsweise stellt die Kommunikationseinrichtung als Funktion "Zeige Werkerkommando an" bereit. Der Prozess und/oder der Arbeitsablauf wird von der Steuereinrichtung vorzugsweise so modelliert, dass er auf die bereitgestellten Funktionen der Prozesseinrichtungen zurückgreift. Beispielsweise wird ein Prozessablauf "GeführtesSchrauben" aus den bereitgestellten Funktionen modelliert: "Start", "ZeigeWerkerkommandoC,Bitte das Bauteil ,Bx' an der Angezeigten Stelle einschrauben", Bauteilname X, Bild)", "SetzeSchraubprogramm(Ma) -> BestätigeAusführung()", "Ende". Die Parameter des modellierten Ablaufs sind hierbei "Bauteil Bx", Bild und Ma.

Einen weiteren Gegenstand der Erfindung bildet eine Prozessanlage. Die Prozessanlage weist insbesondere mindestens eine Prozesseinrichtung auf. Die Prozesseinrichtung ihrerseits weist insbesondere Prozesseinrichtungsfähigkeiten auf. Die Prozessanlage weist eine Werkerführungsanlage auf. Insbesondere ist die Werkerführungsanlage ausgebildet wie vorher beschrieben. Die Werkerführungsanlage ist ausgebildet, dem Werker bei der Benutzung der Prozessanlage einen durchzuführenden Arbeitsschritt zu kommunizieren. Die Ansteuerung und/oder die Kommunikation des durchzuführenden Arbeitsschritts basiert insbesondere auf Prozessdaten. Die Prozessdaten ihrerseits umfassen die Prozesseinrichtungsfähigkeiten, insbesondere als Prozesseinrichtungsfähigkeitsdaten.

Einen weiteren Gegenstand der Erfindung bildet ein Verfahren zur Führung eines Werkers bei der Durchführung eines Arbeitsschrittes mittels einer Prozessanlage. Dabei wird dem Werker ein durchzuführender Arbeitsschritt kommuniziert. Die Kommunikation des durchzuführenden Arbeitsschrittes erfolgt basierend auf Prozessdaten. Die Prozessdaten umfassen Prozesseinrichtungsfähigkeitsdaten. Die Prozesseinrichtungsfähigkeitsdaten weisen Prozesseinrichtungsfähigkeiten von Prozesseinrichtungen auf. Prozesseinrichtungen sind beispielsweise Module, Werkzeuge und/oder Gegenstände, die der Werker zur Durchführung des Arbeitsschrittes zu verwenden hat. Beispielsweise ist die Prozesseinrichtung eine Bohrstation, wobei die Prozesseinrichtungsfähigkeiten Informationen umfassen, dass es sich um eine Bohreinrichtung handelt, welche Drehzahlen und/oder Drehmomente einstellbar sind. Die Kommunikation des Arbeitsschrittes kann dann die Anzeige und/oder Kommunikation dieser Prozesseinrichtungsfähigkeiten umfassen, beispielsweise die Anzeige der möglichen und/oder der zu verwendenden Drehzahlen und/oder Drehmomente.

Einen weiteren Gegenstand der Erfindung bildet ein Computerprogramm, welches ausgebildet ist, bei der Verwendung und/oder Ausführung des Computerprogramms auf einer Rechnereinheit und/oder der Werkerführungsanlage alle Schritte des vorher beschriebenen Verfahrens durchzuführen.

Einen weiteren Gegenstand der Erfindung bildet ein maschinenlesbares Speichermedium, wobei auf dem maschinenlesbaren Speichermedium das Computerprogramm wie vorher beschrieben gespeichert ist.

Einen weiteren nicht vom Schutzbereich umfassten Gegenstand der Erfindung bildet eine elektronische Steuereinheit, wobei die elektronische Steuereinheit ausgebildet ist, alle Schritte des Verfahrens auszuführen.

Weitere Vorteile, Wirkungen und Ausgestaltungen ergeben sich aus den beigefügten Figuren und deren Beschreibung. Dabei zeigen:
Figur 1 ein Ausführungsbeispiel einer Prozessanlage;
Figur 2 beispielhafte Komponenten der Prozessanlage;
Figur 3 Sequenzen beim Ablauf eines Prozesses.

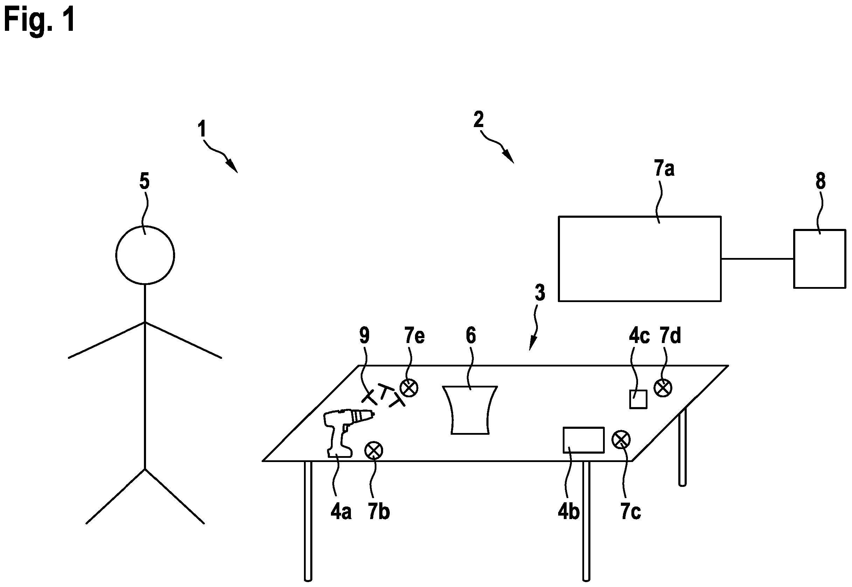

Figur 1 zeigt ein Ausführungsbeispiel einer Prozessanlage 1. Die Prozessanlage 1 umfasst eine Werkerführungsanlage 2. Die Prozessanlage 1 weist einen Arbeitsbereich 3 auf. Der Arbeitsbereich 3 ist hier als ein Tischbereich ausgebildet. In dem Arbeitsbereich 3 sind eine Mehrzahl an Prozesseinheiten 4a, 4b und 4c angeordnet. Die Prozesseinheiten 4a-4c sind vorzugsweise für die Benutzung durch einen Werker 5 ausgebildet. Beispielsweise ist die Prozesseinrichtung 4a eine Bohrmaschine, beispielsweise ein Akkuschrauber, insbesondere mit einstellbarem Drehmoment und/oder einstellbarer Drehzahl. Die Prozesseinrichtung 4b ist beispielsweise ein Messgerät, zum Beispiel ein Multimeter. Die Prozesseinrichtung 4c ist ein Werkzeug zur mechanischen Bearbeitung eines Gegenstands. Mittels der Prozesseinrichtungen 4a-4c ist ein Werkstück 6 herstellbar, vermessbar und/oder bearbeitbar. Das Werkstück 6 kann in einem teilweisen automatisierten Prozess herstellbar und/oder bearbeitbar sein. Der Prozess ist im Speziellen die Herstellung des Werkstückes 6 und umfasst einen Arbeitsschritt, der durch den Werker 5 auszuführen ist. Mittels der Prozessanlage 1 und/oder mittels der Prozesseinrichtungen 4a-4c sind insbesondere unterschiedliche Werkstücke produzierbar, bearbeitbar oder vermessbar. Damit bildet die Prozessanlage 1 eine variabel einsetzbare Anlage zur Herstellung eines Werkstückportfolios. Nachdem der Werker 5 für dieses Portfolio insbesondere bei einem neuen Werkstück 6 einzulernen ist, weist die Prozessanlage 1 die Werkerführungsanlage 2 auf.

Die Werkerführungsanlage 2 weist Kommunikationseinrichtungen 7 und eine Steuereinrichtung 8 auf. Die Kommunikationseinrichtung 7a ist als eine Bildschirmeinrichtung ausgebildet und kann dem Werker 5 Bilder, Videos und/oder Text anzeigen. Im Arbeitsbereich 3 sind die Kommunikationseinrichtungen 7b, 7c, 7d und 7e angeordnet. Die Kommunikationseinrichtungen 7b-7d sind als LEDs ausgebildet und können dem Werker 5 durch Ein- oder Ausschalten eine Information geben. Die Steuereinrichtung 8 ist ausgebildet, mittels der Kommunikationseinrichtungen 7a-7d dem Werker 5 Informationen zum durchzuführenden Arbeitsschritt und/oder zum Prozess zu geben.

Die Prozesseinrichtungen 4a-4c weisen Prozesseinrichtungsfähigkeiten auf. Die Prozesseinrichtungsfähigkeiten sind insbesondere eine Selbstbeschreibung der Prozesseinrichtungen 7a-7c. Beispielsweise umfasst die Prozesseinrichtungsfähigkeit Informationen darüber, um welche Prozesseinrichtung, beispielsweise Bohrmaschine oder Multimeter, es sich handelt und welche Prozessparameter, beispielsweise einstellbares Drehmoment, die Prozesseinrichtung 4a-4c ermöglicht. Die Prozesseinrichtungsfähigkeiten sind der Steuereinrichtung 8 als Prozesseinrichtungsfähigkeitsdaten bereitgestellt. Die Steuereinrichtung 8 ist ausgebildet, basierend auf den Prozesseinrichtungsfähigkeitsdaten dem Werker 5 Informationen zum durchzuführenden Arbeitsschritt anzuzeigen. Beispielsweise ist der durchzuführende Arbeitsschritt ein bohre ein Loch in das Werkstück 6. Dabei zeigt die Kommunikationseinrichtung 7b durch Aufleuchten dem Werker 5 an, die Prozesseinrichtung 4a zu verwenden. Auf der Kommunikationseinrichtung 7a wird die Position in Form eines Bildes des Werkstücks 6 angezeigt, an dem zu bohren ist. Ferner kann als Information dem Werker 5 auf der Kommunikationseinrichtung 7a das zu verwendende Drehmoment angezeigt werden. Insbesondere ist es vorgesehen, dass nach dem durchgeführten Arbeitsschritt der nächste Arbeitsschritt mittels der Kommunikationseinrichtung dem Werker 5 angezeigt wird.

Der Prozess kann einen Arbeitsschritt vorsehen, bei dem ein Bauteil 9 am Werkstück 6 zu verbauen ist. Die Steuereinrichtung 8 kann Bauteilinformationen umfassen, welche insbesondere eine Bauteilnummer und/oder Bauteilform aufweisen. Die Steuereinrichtung 8 kann ausgebildet sein, dem Werker 5 Informationen zur Verwendung des Bauteils 9 mittels der Kommunikationseinrichtung 7, insbesondere 7a und/oder 7d, zu kommunizieren. Beispielsweise muss in dem Arbeitsschritt eine Schraube als ein Bauteil 9 am Werkstück 6 verbaut werden. Dabei steuert die Steuereinrichtung 8 die LED 7d an, sodass der Werker 5 weiß, dass er die Bauteile 9 zu verwenden hat. Auf der Kommunikationseinrichtung 7a können dem Werker 5 weitere Informationen, beispielsweise eine Werkstücknummer, angezeigt werden.

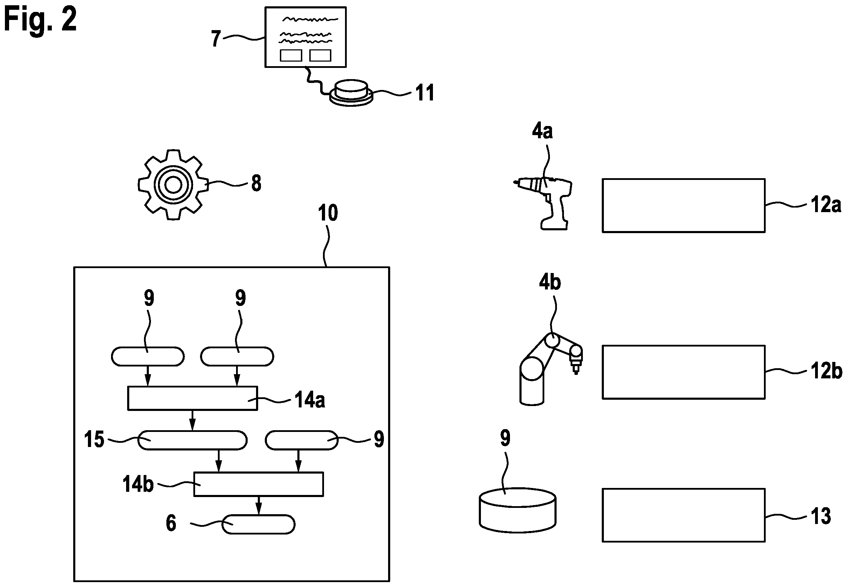

Figur 2 zeigt schematisch eine Prozessanlage 1 mit ihren Komponenten und dem Prozessablauf 10. Die Prozessanlage 1 weist eine Kommunikationseinrichtung 7 auf. Die Kommunikationseinrichtung 7 ist beispielsweise als eine Anzeigeeinrichtung ausgebildet. Ferner weist die Prozessanlage 1 eine Rückkopplungseinrichtung 11 auf, welche als ein Taster ausgebildet ist. Die Rückkopplungseinrichtung 11 ist in diesem Ausführungsbeispiel Teil der Kommunikationseinrichtung 7. Mittels der Rückkopplungseinrichtung 11 kann der Werker den Abschluss eines Arbeitsschrittes und/oder Prozesses kommunizieren und der Steuereinrichtung 8 bereitstellen.

Die Prozessanlage 1 weist ferner eine Mehrzahl an Prozesseinrichtungen 4a und 4b auf. Die Prozesseinrichtung 4a ist als ein Schrauber ausgebildet. Der Schrauber 4a ist von dem Werker 5 nutzbar. Die Prozesseinrichtung 4a weist Prozesseinrichtungsfähigkeiten 12a auf. Die Prozesseinrichtungsfähigkeiten 12a sind für die Prozesseinrichtung 4a schraube eine Schraube hinein, montiere einen Bit und/oder entferne einen Bit.

Die Prozesseinrichtung 4b ist als eine automatische Prozesseinrichtung ausgebildet. Die Prozesseinrichtung 4d ist beispielsweise eine automatische Schraubstation. Die Prozesseinrichtung 4b weist Prozesseinrichtungsfähigkeiten 12b auf. Die Prozesseinrichtungsfähigkeiten 12b sind beispielsweise schraube eine Schraube hinein, entferne einen Bit und/oder montiere einen Bit. Die Prozesseinrichtungsfähigkeiten 12a und 12b sind als Prozesseinrichtungsfähigkeitsdaten der Steuereinrichtung 8 bereitgestellt. Die Steuereinrichtung 8 ist ausgebildet, dem Werker 5 auf der Kommunikationseinrichtung 7 Informationen zur Durchführung des Arbeitsschrittes anzuzeigen, beispielsweise anzuzeigen montiere die Schraube mit der Prozesseinrichtung 4a.

In der Prozessanlage 1 können auch Bauteile 9 vorgesehen sein, welche beispielsweise mit den Prozesseinrichtungen 4a, 4b verbaut und/oder verbraucht werden können. Beispielsweise sind die Bauteile 9 Schrauben. Die Bauteile 9 weisen Bauteilinformationen 13 auf. Die Bauteilinformationen 13 sind beispielsweise ein Bild des Bauteils 9, der Name des Bauteils 9 und/oder eine Bauteilnummer. Die Bauteilinformationen 13 sind datentechnisch der Steuereinrichtung 8 bereitgestellt. Die Steuereinrichtung 8 ist beispielsweise ausgebildet, basierend auf den Prozesseinrichtungsfähigkeitsdaten und den Bauteilinformationen 13 dem Werker Informationen zur Durchführung des Arbeitsschrittes auf der Kommunikationseinrichtung 7 anzuzeigen. Beispielsweise wird dazu dem Werker 5 angezeigt verbaue die Schraube X mittels der Prozesseinrichtung 4a.

Die Steuereinrichtung 8 ist als eine Rechnereinheit ausgebildet. Die Steuereinrichtung 8 ist ausgebildet, einen Prozessablauf 10 eines Prozesses durchzuführen und/oder abzuarbeiten. Insbesondere wird die Kommunikationseinrichtung 7 basierend auf dem Prozessablauf 10 angesteuert. Der Prozessablauf 10 ist hier als ein Ablaufdiagramm dargestellt. Dabei werden in einem ersten Schritt zwei Bauteile 9 in einem Arbeitsschritt 14a verbaut. Beispielsweise werden in dem Arbeitsschritt 14a zwei Bauteile 9 miteinander verbunden. Mittels des Arbeitsschritts 14a wird ein Zwischenprodukt 15 hergestellt. Das Zwischenprodukt 15 wird mit einem weiteren Bauteil 9 in einem Arbeitsschritt 14b weiterbearbeitet. Beispielsweise wird in dem Arbeitsschritt 14b eine Schraube in das Zwischenprodukt 15 geschraubt. Aus dem Arbeitsschritt 14b entsteht dann das Werkstück 6. Die Steuereinrichtung 8 ist ausgebildet, für die Arbeitsschritte, insbesondere 14a und 14b, dem Werker 5 Informationen zur Durchführung des Arbeitsschrittes anzuzeigen. Für den Arbeitsschritt 14a wird dem Werker beispielsweise angezeigt verbinde die zwei Bauteile 9 miteinander mittels der Prozesseinrichtung 4a, wobei für den Arbeitsschritt 14b dem Werker angezeigt wird schraube die Schraube 9 in das Zwischenprodukt 15 mittels der Prozesseinrichtung 4a.

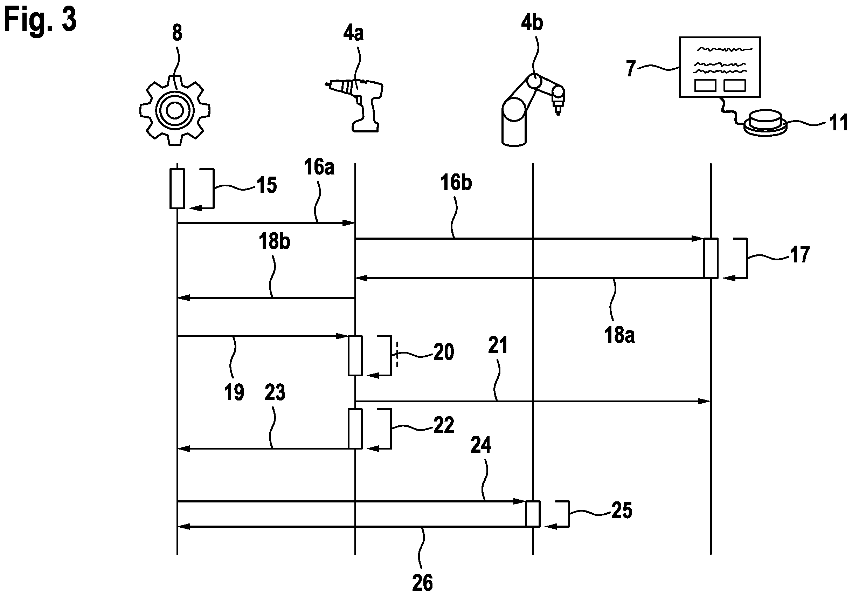

Figur 3 zeigt beispielhaft eine Sequenz für die Ausführung eines Prozesses mit drei Arbeitsschritten 14a, 14b und 14c. Eine Steuereinrichtung 8 interpretiert und überprüft in einem ersten Schritt 15 den Arbeitsplan 10. In einem Schritt 16a und 16b wird die Kommunikationseinrichtung 7 angesteuert, dem Werker 5 anzuzeigen, dass an der Prozesseinrichtung 4a ein Bit zu montieren ist. Die Ausführung des weiteren Prozessablaufs 10 wird dann pausiert, bis in einem Schritt 17 durch den Werker 5 bestätigt wird, dass der Arbeitsschritt 14a, das Wechseln des Bits, abgeschlossen ist. In einem Schritt 18a und 18b wird der Steuereinrichtung 8 zurückgemeldet, dass der Arbeitsschritt 14a abgeschlossen ist. Daraufhin wird der Prozessablauf 10 weiter ausgeführt.

An den Arbeitsschritt 14a schließt sich ein Arbeitsschritt 14b an. Der Arbeitsschritt 14b sieht das Schrauben mittels der Prozesseinrichtung 4a vor. Im Schritt 19 wird die Prozesseinrichtung 4a von der Steuereinheit 8 angesteuert, den Betätigungsknopf freizugeben. In einem Schritt 20 gibt die Prozesseinrichtung 4a den Betätigungsknopf frei. An das Freigeben des Betätigungsknopfes 19 schließt sich der Schritt 21 an, bei dem die Kommunikationseinrichtung 7 angesteuert wird, dem Werker 5 Informationen, beispielsweise ein Bild, anzuzeigen, wie er zu schrauben hat. Dieses wird so lange angezeigt, bis der Schritt 22 vom Werker durchgeführt wird und gebohrt wird. Dabei wird sensorisch die Betätigung der Prozesseinrichtung 4a durch den Werker 5 bestimmt. Die Betätigung im Schritt 22 wird der Steuereinrichtung 8 im Schritt 23 datentechnisch übermittelt. An den Schritt 23 schließt sich der Arbeitsschritt 14c an. Dazu wird in einem Schritt 24 die Prozesseinrichtung 4b angesteuert, einen Arbeitsschritt durchzuführen. Die Prozesseinrichtung 4b ist eine automatische Prozesseinrichtung und bedarf keiner Betätigung durch den Werker 5. Im Schritt 25 wird somit der Arbeitsschritt automatisch von der Prozesseinrichtung 4b durchgeführt. Im Schritt 26 wird die Betätigung und/oder der Abschluss des Schrittes 25 der Prozesseinrichtung 8 datentechnisch mitgeteilt.

## Patentansprüche

1. Werkerführungsanlage (2) zur Führung eines Werkers (5) bei der Durchführung eines Prozesses mit einer Prozessanlage (1),
wobei die Prozessanlage (1) mindestens eine Prozesseinrichtung (12, 12a-c) mit Prozesseinrichtungsfähigkeiten aufweist, wobei die Prozesseinrichtungsfähigkeiten Selbstbeschreibungen der Prozesseinrichtung (12, 12a-c) sind, welche Fähigkeiten, Möglichkeiten und/oder Bearbeitungsschritte die Prozesseinrichtung (12, 12a-c) ermöglicht,
wobei die Prozesseinrichtungsfähigkeiten datentechnisch in der Prozesseinrichtung (12, 12a-c) hinterlegt sind,
wobei der Prozess mindestens einen Arbeitsschritt (14, 14a-14c) umfasst,
mit einer Steuereinrichtung (8) und einer Kommunikationseinrichtung (7, 7a-e),
wobei die Steuereinrichtung (8) ausgebildet ist, die Kommunikationseinrichtung (7, 7a-e) basierend auf Prozessdaten anzusteuern, den durchzuführenden Arbeitsschritt (14, 14a-c) dem Werker (5) zu kommunizieren,
wobei die Steuereinrichtung (8) datentechnisch mit den Prozesseinrichtungen (12, 12a-c) verbunden und / oder verbindbar ist, so dass der Steuereinrichtung (8) die Prozesseinrichtungsfähigkeiten als Prozesseinrichtungsfähigkeitsdaten bereitgestellt sind, wobei die Prozessdaten die Prozesseinrichtungsfähigkeitsdaten umfassen.

2. Werkerführungsanlage (2) nach Anspruch 1, **dadurch gekennzeichnet, dass** die Prozessdaten einen Prozessablauf (10) umfassen.

3. Werkerführungsanlage (2) nach Anspruch 1 oder 2, **dadurch gekennzeichnet, dass** die Prozesseinrichtungsfähigkeitsdaten Informationen zu dem zu kommunizierenden Arbeitsschritt umfassen.

4. Werkerführungsanlage (2) nach einem der vorherigen Ansprüche, **dadurch gekennzeichnet, dass** die Steuereinrichtung (8) ausgebildet ist, basierend auf dem Prozess, dem Arbeitsschritt, dem Prozessablauf und/oder den Prozessdaten eine für den Arbeitsschritt und/oder den Prozess geeignete Prozesseinrichtung (12, 12a-c) auszuwählen.

5. Werkerführungsanlage (2) nach einem der vorherigen Ansprüche, **dadurch gekennzeichnet, dass** die Steuereinrichtung (8) ausgebildet ist, die Prozesseinrichtung (12, 12a-c) zu starten und/oder anzusteuern den Arbeitsschritt durchzuführen.

6. Werkerführungsanlage (2) nach einem der vorherigen Ansprüche, **dadurch gekennzeichnet, dass** der Prozess den Einbau und/oder die Verwendung eines Bauteils (9) umfasst, wobei die Prozessdaten Bauteilinformationen umfassen.

7. Werkerführungsanlage (2) nach einem der vorherigen Ansprüche, **gekennzeichnet durch** eine Sensoreinrichtung zur Überwachung des Arbeitsschritts und zur Bereitstellung von Sensordaten, wobei die Prozessdaten die Sensordaten umfassen.

8. Werkerführungsanlage (2) nach einem der vorherigen Ansprüche, **dadurch gekennzeichnet, dass** der Prozess mindestens zwei Arbeitsschritte umfasst, wobei die Steuereinrichtung (8) ausgebildet ist, die Kommunikationseinrichtung (7, 7a-e) basierend auf den Prozessdaten anzusteuern, die Arbeitsschritte des Prozesses zur Durchführung des Prozesses dem Werker (5) zu kommunizieren.

9. Werkerführungsanlage (2) nach Anspruch 8, **dadurch gekennzeichnet, dass** der Arbeitsschritt als eine Sequenz und/oder eine verknüpfte Struktur von Prozesseinrichtungsfähigkeiten darstellbar ist und/oder ausgebildet ist.

10. Werkerführungsanlage (2) nach Anspruch 9, **dadurch gekennzeichnet, dass** die Steuereinrichtung (8) ausgebildet ist, basierend auf dem Prozess, dem Arbeitsschritt, den Prozesseinrichtungsfähigkeiten und/oder den Prozessdaten zu kommunizierende Informationen zu extrahieren und mittels der Kommunikationseinrichtung (7, 7a-e) anzuzeigen.

11. Werkerführungsanlage (2) nach einem der vorherigen Ansprüche, **gekennzeichnet durch** eine Rückkopplungseinrichtung (11) um eine Betätigung durch den Werker (5) als Werkerdaten bereitzustellen, wobei die Prozessdaten die Werkerdaten umfassen.

12. Prozessanlage (1) **gekennzeichnet durch** mindestens eine Prozesseinrichtung (12, 12a-c) und eine Werkerführungsanlage (2) nach einem der vorherigen Ansprüche.

13. Verfahren zur Führung eines Werkers (5) mit Hilfe der Werkerführungsanlage (2) nach einem der Ansprüche 1 bis 11 bei der Durchführung eines Arbeitsschrittes, wobei dem Werker (5) ein durchzuführender Arbeitsschritt kommuniziert wird, wobei die Kommunikation des durchzuführenden Arbeitsschrittes basierend auf Prozessdaten erfolgt, wobei die Prozessdaten Prozesseinrichtungsfähigkeitsdaten umfassen, wobei die Prozesseinrichtungen Prozesseinrichtungsfähigkeiten aufweisen und die Prozesseinrichtungsfähigkeitsdaten die Prozesseinrichtungsfähigkeiten umfassen, wobei Informationen und/oder Daten variabel basierend auf der Prozesseinrichtung und/oder auf den dazugehörigen Prozesseinrichtungsfähigkeiten angepasst werden, sodass eine Werkerführung dynamisch angepasst wird.

14. Computerprogramm, **dadurch gekennzeichnet, dass** das Computerprogramm ausgebildet ist, alle Schritte des Verfahrens nach Anspruch 13 zu veranlassen, wenn es auf einem Computer oder der Werkerführungsanlage (2) nach einem der Ansprüche 1 bis 11 ausgeführt wird.

15. Maschinenlesbares Speichermedium, auf dem das Computerprogramm nach Anspruch 14 gespeichert ist.

## Claims

1. Worker guidance system (2) for guiding a worker (5) when carrying out a process using a process system (1),
wherein the process system (1) has at least one process device (12, 12a-c) having process device capabilities, wherein the process device capabilities are self-descriptions of the process device (12, 12a-c) regarding what capabilities, possibilities and/or processing steps are made possible by the process device (12, 12a-c),
wherein the process device capabilities are data-technologically stored in the process device (12, 12a-c),
wherein the process comprises at least one work step (14, 14a-14c),
comprising a control device (8) and a communication device (7, 7a-e),
wherein the control device (8) is designed to control the communication device (7, 7a-e), on the basis of process data, to communicate to the worker (5) the work step (14, 14a-c) to be carried out,
wherein the control device (8) is data-technologically connected and/or connectable to the process devices (12, 12a-c), so that the process device capabilities are made available to the control device (8) as process device capability data, wherein the process data comprise the process device capability data.

2. Worker guidance system (2) according to Claim 1, **characterized in that** the process data comprise a process sequence (10).

3. Worker guidance system (2) according to Claim 1 or 2, **characterized in that** the process device capability data comprise information about the work step to be communicated.

4. Worker guidance system (2) according to any of the preceding claims, **characterized in that** the control device (8) is designed to select a process device (12, 12a-c) suitable for the work step and/or the process on the basis of the process, the work step, the process sequence and/or the process data.

5. Worker guidance system (2) according to any of the preceding claims, **characterized in that** the control device (8) is designed to start the process device (12, 12a-c) and/or to control it to carry out the work step.

6. Worker guidance system (2) according to any of the preceding claims, **characterized in that** the process comprises the installation and/or use of a component (9), wherein the process data comprise component information.

7. Worker guidance system (2) according to any of the preceding claims, **characterized by** a sensor device for monitoring the work step and for providing sensor data, wherein the process data comprise the sensor data.

8. Worker guidance system (2) according to any of the preceding claims, **characterized in that** the process comprises at least two work steps, wherein the control device (8) is designed to control the communication device (7, 7a-e), on the basis of the process data, to communicate to the worker (5) the work steps of the process for carrying out the process.

9. Worker guidance system (2) according to Claim 8, **characterized in that** the work step is representable and/or designed as a sequence and/or a linked structure of process device capabilities.

10. Worker guidance system (2) according to Claim 9, **characterized in that** the control device (8) is designed, on the basis of the process, the work step, the process device capabilities and/or the process data, to extract information to be communicated and to display it by means of the communication device (7, 7a-e).

11. Worker guidance system (2) according to any of the preceding claims, **characterized by** a feedback device (11) in order to provide an actuation by the worker (5) as worker data, wherein the process data comprise the worker data.

12. Process system (1), **characterized by** at least one process device (12, 12a-c) and a worker guidance system (2) according to any of the preceding claims.

13. Method for guiding a worker (5) with the aid of the worker guidance system (2) according to any of Claims 1 to 11 when carrying out a work step, wherein a work step to be carried out is communicated to the worker (5), wherein the communication of the work step to be carried out is effected on the basis of process data, wherein the process data comprise process device capability data, wherein the process devices have process device capabilities and the process device capability data comprise the process device capabilities, wherein information and/or data are variably adapted on the basis of the process device and/or the associated process device capabilities, so that a worker guidance is dynamically adapted.

14. Computer program, **characterized in that** the computer program is designed to instigate all steps of the method according to Claim 13 when it is executed on a computer or the worker guidance system (2) according to any of Claims 1 to 11.

15. Machine-readable storage medium on which the computer program according to Claim 14 is stored.

## Revendications

1. Système de guidage d'opérateur (2) permettant de guider un opérateur (5) lors de l'exécution d'un traitement avec une installation de traitement (1),
dans lequel l'installation de traitement (1) présente au moins un dispositif de traitement (12, 12a-c) pourvu de capacités de dispositif de traitement, les capacités de dispositif de traitement étant des auto-descriptions du dispositif de traitement (12, 12a-c) indiquant les capacités, possibilités et/ou étapes de traitement rendues possibles par le dispositif de traitement (12, 12a-c),
dans lequel les capacités de dispositif de traitement sont stockées de manière informatisée dans le dispositif de traitement (12, 12a-c),
dans lequel le traitement comprend au moins une étape de travail (14, 14a-14c),
comprenant un dispositif de commande (8) et un dispositif de communication (7, 7a-e),
dans lequel le dispositif de commande (8) est réalisé pour piloter le dispositif de communication (7, 7a-e) sur la base de données de traitement pour communiquer à l'opérateur (5) l'étape de travail (14, 14a-c) à exécuter,
dans lequel le dispositif de commande (8) est relié et/ou peut être relié de manière informatisée aux dispositifs de traitement (12, 12a-c) de sorte que les capacités de dispositif de traitement sont fournies au dispositif de commande (8) sous forme de données de capacité de dispositif de traitement, les données de traitement comprenant les données de capacité de dispositif de traitement.

2. Système de guidage d'opérateur (2) selon la revendication 1, **caractérisé en ce que** les données de traitement comprennent un déroulement de traitement (10).

3. Système de guidage d'opérateur (2) selon la revendication 1 ou 2, **caractérisé en ce que** les données de capacité de dispositif de traitement comprennent des informations concernant l'étape de travail à communiquer.

4. Système de guidage d'opérateur (2) selon l'une quelconque des revendications précédentes, **caractérisé en ce que** le dispositif de commande (8) est réalisé pour sélectionner sur la base du traitement, de l'étape de travail, du déroulement de traitement et/ou des données de traitement un dispositif de traitement (12, 12a-c) adapté à l'étape de travail et/ou au traitement.

5. Système de guidage d'opérateur (2) selon l'une quelconque des revendications précédentes, **caractérisé en ce que** le dispositif de commande (8) est réalisé pour démarrer et/ou piloter le dispositif de traitement (12, 12a-c) pour qu'il exécute l'étape de travail.

6. Système de guidage d'opérateur (2) selon l'une quelconque des revendications précédentes, **caractérisé en ce que** le traitement comprend l'installation et/ou l'utilisation d'un composant (9), les données de traitement comprenant des informations de composant.

7. Système de guidage d'opérateur (2) selon l'une quelconque des revendications précédentes, **caractérisé par** un dispositif de capteur pour surveiller l'étape de travail et pour fournir des données de capteur, les données de traitement comprenant les données de capteur.

8. Système de guidage d'opérateur (2) selon l'une quelconque des revendications précédentes, **caractérisé en ce que** le traitement comprend au moins deux étapes de travail, le dispositif de commande (8) étant réalisé pour piloter le dispositif de communication (7, 7a-e) sur la base des données de traitement pour qu'il communique à l'opérateur (5) les étapes de travail du traitement pour l'exécution du traitement.

9. Système de guidage d'opérateur (2) selon la revendication 8, **caractérisé en ce que** l'étape de travail peut être représentée et/ou est réalisée sous la forme d'une séquence et/ou d'une structure liée de capacités de dispositif de traitement.

10. Système de guidage d'opérateur (2) selon la revendication 9, **caractérisé en ce que** le dispositif de commande (8) est réalisé pour extraire, sur la base du traitement, de l'étape de travail, des capacités de dispositif de traitement et/ou des données de traitement, des informations à communiquer et pour les afficher au moyen du dispositif de communication (7, 7a-e).

11. Système de guidage d'opérateur (2) selon l'une quelconque des revendications précédentes, **caractérisé par** un dispositif de rétroaction (11) pour fournir un actionnement par l'opérateur (5) sous forme de données d'opérateur, les données de traitement comprenant les données d'opérateur.

12. Installation de traitement (1), **caractérisée par** au moins un dispositif de traitement (12, 12a-c) et un système de guidage d'opérateur (2) selon l'une quelconque des revendications précédentes.

13. Procédé permettant de guider un opérateur (5) à l'aide du système de guidage d'opérateur (2) selon l'une quelconque des revendications 1 à 11 lors de l'exécution d'une étape de travail, dans lequel une étape de travail à exécuter est communiquée à l'opérateur (5), dans lequel la communication de l'étape de travail à exécuter est effectuée sur la base de données de traitement, les données de traitement comprenant des données de capacité de dispositif de traitement, dans lequel les dispositifs de traitement présentent des capacités de dispositif de traitement et les données de capacités de dispositif de traitement comprennent les capacités de dispositif de traitement, dans lequel des informations et/ou des données sont adaptées de manière variable sur la base du dispositif de traitement et/ou des capacités de dispositif de traitement associées de sorte qu'un guidage d'opérateur est adapté de manière dynamique.

14. Programme informatique, **caractérisé en ce que** le programme informatique est réalisé pour provoquer toutes les étapes du procédé selon la revendication 13 lorsqu'il est exécuté sur un ordinateur ou le système de guidage d'opérateur (2) selon l'une quelconque des revendications 1 à 11.

15. Support de stockage lisible par machine, sur lequel est stocké le programme informatique selon la revendication 14.
